# EUROPÄISCHE PATENTSCHRIFT

(11) **EP 1 191 487 B1**
(45) Veröffentlichungstag und Bekanntmachung des Hinweises auf die Patenterteilung: **10.10.2007**
(21) Anmeldenummer: 01122720.4
(22) Anmeldetag: 21.09.2001
(51) Int. Cl.: G07C 9/00, B60R 25/00

(54) **Schliesssystem, insbesondere für ein Kraftfahrzeug**
Locking system, in particular for a vehicle
Système de verrouillage, notamment pour véhicule à moteur

(30) Priorität: 23.09.2000 DE 10047243
(43) Veröffentlichungstag der Anmeldung: 27.03.2002
(73) Patentinhaber: Marquardt GmbH, 78604 Rietheim-Weilheim (DE)
(72) Erfinder: Weisser, Dietmar, 78604 Rietheim-Weilheim (DE); Albrecht, Sören, 78604 Rietheim-Weilheim (DE); Müller, Karl, 78628 Rottweil-Neufra (DE)
(74) Vertreter: Eisele, Otten, Roth & Dobler

(56) Entgegenhaltungen:
- EP-A- 0 980 800
- EP-A- 1 184 236
- DE-A- 19 827 586
- DE-A- 19 900 415
- DE-C- 4 409 167

## Beschreibung

Die Erfindung betrifft ein Schließsystem nach dem Oberbegriff des Patentanspruchs 1.

Bei erhöhten Sicherheitsanforderungen werden elektronische Schließsysteme verwendet, die beispielsweise mittels elektromagnetischer Wellen arbeiten. Insbesondere bei Kraftfahrzeugen werden solche Schließsysteme als Türschließsysteme für die Zugangsberechtigung und/oder als Zündschloßsysteme, Lenkradverriegelungen, Wegfahrsperren o. dgl. für die Fahrberechtigung verwendet.

Derartige Schließsysteme sind aus der DE 43 40 260 A1 bekannt. Das Schließsystem besteht aus einer wenigstens zwei Zustände besitzenden, als Steuereinrichtung zur Ent- und/oder Verriegelung der Autotüren, des Zündschlosses o. dgl. ausgebildeten ersten Einrichtung und einer zugehörigen, in der Art eines elektronischen Schlüssels ausgebildeten zweiten Einrichtung. Die beiden Einrichtungen besitzen zu deren bestimmungsgemäßen Betrieb Mittel zum Senden und/oder Empfangen von Signalen. Im bestimmungsgemäßen Betrieb ist zwischen dem Schlüssel und der Steuereinrichtung wenigstens ein Signal als codiertes Betriebssignal zur Authentifikation des Schlüssels übertragbar, so daß nach positiver Auswertung des übertragenen Betriebssignals und damit bei berechtigtem Schlüssel eine Änderung des Zustandes der Steuereinrichtung bewirkbar ist.

Solche Schließsysteme sind auch mit sogenannten "Keyless"-Funktionalitäten weiterentwickelt. So ist bei der "Keyless Entry"-Funktionalität eine manuelle Betätigung des elektronischen Schlüssels durch den Benutzer nicht mehr notwendig. Es genügt, daß der Benutzer den Schlüssel mit sich führt. Das Betriebssignal wird dann für die Zugangsberechtigung zwischen den beiden Einrichtungen selbsttätig übertragen, wenn der Benutzer sich in einem, in der Nähe des Kraftfahrzeugs befindlichen Wirkbereich aufhält und dort beispielsweise den Türgriff an der Autotüre betätigt. Ebenso können diese Schließsysteme eine "Keyless Go"-Funktionalität aufweisen, wobei das Betriebssignal für die Fahrberechtigung zwischen den beiden Einrichtungen selbsttätig übertragen wird, wenn der Benutzer sich innerhalb des Kraftfahrzeugs befindet und beispielsweise eine Start/Stop-Taste im Armaturenbrett betätigt.

Aufgrund der erweiternden "Keyless"-Funktionalitäten sind solche bekannten Schließsysteme komplex sowie aufwendig ausgestaltet und benötigen einen hohen Betriebsaufwand. Außerdem erfüllen diese Schließsysteme nicht in allen Fällen wünschenswerte Sicherheitsanforderungen.

Weiter ist aus der nicht vorveröffentlichten EP 1 184 236 A2 ein Schließsystem für die Zugangs- und/oder Fahrberechtigung mit "Keyless"-Funktionalität an einem Kraftfahrzeug bekannt, bei dem zwischen der ersten Einrichtung im Kraftfahrzeug sowie der zugehörigen zweiten Einrichtung zu deren bestimmungsgemäßen Betrieb ebenfalls Signale übertragen werden. Zunächst sendet die erste Einrichtung ein elektromagnetisches Signal für die zugehörige zweite Einrichtung als Wecksignal, derart daß die zweite Einrichtung aus einem Ruhezustand mit verringertem Energiebedarf in einen aktivierten Zustand für den bestimmungsgemäßen Betrieb übergeführt wird. Danach sendet die erste Einrichtung ein weiteres elektromagnetisches Signal als Bereichsabgrenzungssignal, wodurch der Standort der zweiten Einrichtung in Bezug auf die erste Einrichtung am und/oder im Kraftfahrzeug bestimmt werden kann. Schließlich wird ein codiertes Betriebssignal zur Authentifikation der zweiten Einrichtung übertragen, so daß nach positiver Auswertung des übertragenen Betriebssignals bei berechtigter zweiter Einrichtung eine Änderung des Zustandes der ersten Einrichtung bewirkbar ist.

Der Erfindung liegt die Aufgabe zugrunde, das mit "Keyless"-Funktionalität ausgestattete Schließsystem einfacher und/oder effizienter auszugestalten.

Diese Aufgabe wird bei einem gattungsgemäßen Schließsystem durch die kennzeichnenden Merkmale des Anspruchs 1 gelöst.

Wesentlich beim erfindungsgemäßen Schließsystem ist, daß die erste Einrichtung ein Wecksignal sowie ein Bereichsabgrenzungssignal für die zweite Einrichtung sendet. Mit Hilfe des Bereichsabgrenzungssignals kann der Standort der zweiten Einrichtung bestimmt werden, der anschließend mit einem Rückantwortsignal von der zweiten zur ersten Einrichtung gesendet wird. Zwischen dem Weck- und dem Bereichsabgrenzungssignal wird von der ersten Einrichtung ein Selektionssignal gesendet, das die Identität des Kraftfahrzeugs enthält. Mit Hilfe des Selektionssignals kann der Dialog mit der zweiten Einrichtung bereits dann frühzeitig abgebrochen werden, wenn die zweite Einrichtung zu einem anderen Kraftfahrzeug, das gegebenenfalls jedoch vom gleichen Kraftfahrzeug-Typ ist, zugehörig ist. Sind diese Signale erfolgreich übermittelt, so wird schließlich die Authentifikation der zweiten Einrichtung mittels weiterer codierter Signale durchgeführt. Sind somit die für das Wecken sowie die Bereichsabgrenzung notwendigen Vorbedingungen nicht erfüllt, so wird beim erfindungsgemäßen Schließsystem die an sich aufwendige Authentifikation gar nicht durchgeführt, womit eine effizientere Betriebsweise für das Schließsystem ermöglicht ist. Weitere Ausgestaltungen der Erfindung sind Gegenstand der Unteransprüche.

Ergänzend oder auch alternativ kann bereits im Wecksignal eine Kennung zur Codierung des Kraftfahrzeug-Typs enthalten sein, so daß lediglich demselben Kraftfahrzeug-Typ zugeordnete zweite Einrichtungen aktiviert werden. Dadurch ist jeweils eine weitere Steigerung in der Effizienz der Betriebsweise des Schließsystems möglich.

Besonders bevorzugt ist, für das Weck- und/oder das Bereichsabgrenzungssignal ein induktives Signal zu verwenden. Aufgrund der begrenzten Reichweite eines induktiven Signals läßt sich somit der Wirkbereich für das Schließsystem auf einfache Art und Weise einstellen. Gleichzeitig wird dadurch die Sicherheit vor Manipulation am Schließsystem durch unberechtigte Benutzer gesteigert. Zweckmäßigerweise besitzt hierfür die erste Einrichtung mehrere induktive Sender beziehungsweise als induktive Sender dienende Spulen und die zweite Einrichtung einen induktiven Empfänger. Jeweils ein induktiver Sender und/oder eine Spule ist der linken Kraftfahrzeugseite, der rechten Kraftfahrzeugseite sowie dem Kraftfahrzeugheck zugeordnet.

Ebenfalls besonders bevorzugt ist, für das Selektions- und/oder das Rückantwortsignal und/oder für die Authentifikation Hochfrequenz-Signale zu verwenden. Die Hochfrequenzsignale bieten eine schnelle Übertragung auch bei größeren Datenmengen, so daß das Schließsystem reaktionsschnell betreibbar ist. Dadurch ist der Benutzerkomfort gesteigert sowie die Diebstahlsicherheit weiter erhöht. Hierfür besitzt die erste Einrichtung einen HF-Sender/Empfänger mit Antenne, der beispielsweise in einem als Dachmodul ausgebildeten Steuergerät, in einem in der Mittelkonsole befindlichen Steuergerät, im Zündstartschloß o. dgl. angeordnet ist. Die zweite Einrichtung weist dann ebenfalls einen HF-Sender/Empfänger mit Antenne auf.

Dem Kraftfahrzeug können mehrere Gruppen von Schlüsseln als sogenannte Linien zugeordnet sein. Beispielsweise können dann ein erster Benutzer für das Kraftfahrzeug im Besitz der ersten Linie und weitere Benutzer im Besitz von weiteren Linien sein. Zweckmäßigerweise enthält dann das Selektionssignal eine Information zu den dem Kraftfahrzeug tatsächlich zugehörigen Linien, wodurch die Authentifikation gezielt auf bestimmte Linien eingrenzbar ist. Darüberhinaus können die Linien eine gewisse Rangfolge aufweisen, so daß eine Priorisierung der Linien für die Authentifikation möglich ist, falls sich mehrere berechtigte Benutzer gleichzeitig dem Kraftfahrzeug nahem. Schließlich kann im Rückantwortsignal, beispielsweise in einem entsprechenden Zeitschlitz, auch eine Information zu der aktiven Linie zwecks Priorisierung o. dgl. enthalten sein.

Das Bereichsabgrenzungssignal kann aus mehreren Teilsignalen bestehen. Es bietet sich an, je ein Teilsignal der linken sowie der rechten Kraftfahrzeugseite und ein weiteres Teilsignal dem Kraftfahrzeugheck zuzuordnen. Werden die Teilsignale nacheinander ausgesendet, so läßt sich der Standort der zweiten Einrichtung auf einfache Art und Weise dadurch bestimmen, indem festgestellt wird, welche dieser Teilsignale von der zweiten Einrichtung überhaupt und/oder mit welcher Feldstärke empfangen werden. Bevorzugterweise sendet die erste Einrichtung das Bereichsabgrenzungssignal synchronisiert in Bezug auf das Selektionssignal, womit der Empfang bzw. Nichtempfang der Teilsignale eindeutig von der zweiten Einrichtung feststellbar ist. Zweckmäßigerweise sendet die zweite Einrichtung die Information betreffend deren Standort dann mit dem Rückantwortsignal an die erste Einrichtung.

Zur Auslösung des Wecksignals bietet sich ein durch den Benutzer manuell betätigbarer Schalter und/oder Sensor an. Der Schalter bzw. Sensor, der als kapazitiv arbeitender Näherungssensor ausgestaltet sein kann, für die Zugangsberechtigung zum Kraftfahrzeug ist beispielsweise im Türgriff oder im Heckklappengriff des Kraftfahrzeugs angeordnet. Der Start/Stop-Schalter bzw. Sensor für die Fahrberechtigung des Kraftfahrzeugs ist beispielsweise am Gangwahlhebel, am Zündschloß, im Armaturenbrett oder in der Mittelkonsole angeordnet.

Die mit der Erfindung erzielten Vorteile bestehen insbesondere darin, daß das Schließsystem einfach und kostengünstig ausgestaltet ist. Dennoch arbeitet das Schließsystem zuverlässig sowie betriebssicher und bietet einen hohen Komfort für den Benutzer. Zudem ist das Schließsystem manipulationssicher und fehlertolerant, was die Diebstahlsicherheit für das Kraftfahrzeug erhöht.

Ein Ausführungsbeispiel der Erfindung mit verschiedenen Weiterbildungen und Ausgestaltungen ist in den Zeichnungen dargestellt und wird im folgenden näher beschrieben. Es zeigen
- Fig. 1: ein mit einem Schließsystem ausgestattetes Kraftfahrzeug,
- Fig. 2: ein schematisches Blockschaltbild für das Schließsystem in einer Ausgestaltung,
- Fig. 3: ein schematisches Blockschaltbild für das Schließsystem in einer weiteren Ausgestaltung,
- Fig. 4: ein Zeitdiagramm für die Funktion des Schließsystems zur Zugangsberechtigung zum Kraftfahrzeug und
- Fig. 5: ein Zeitdiagramm für die Funktion des Schließsystems zur Fahrberechtigung des Kraftfahrzeugs.

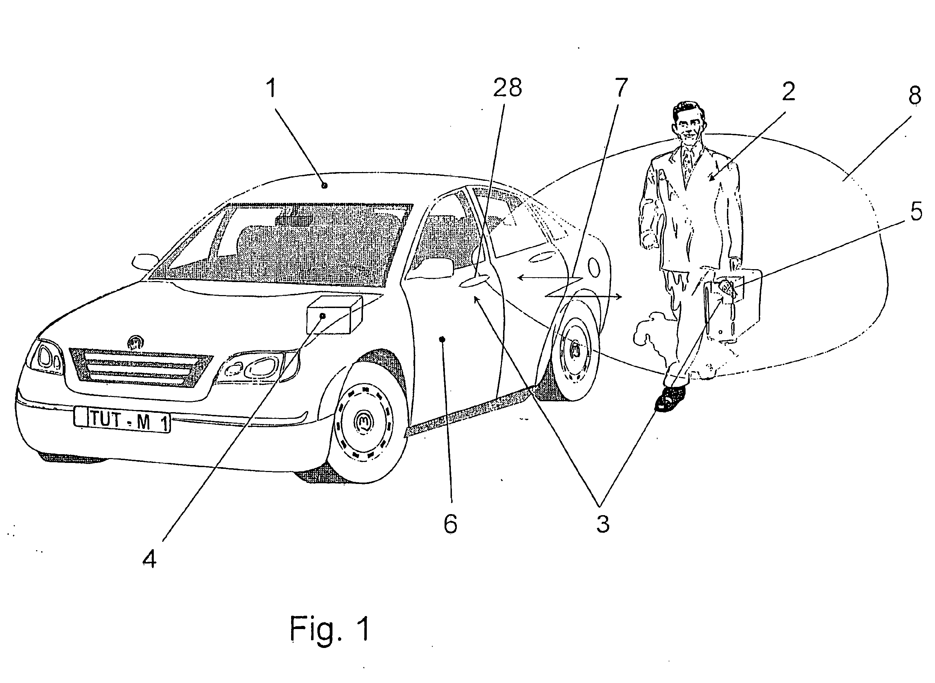

In Fig. 1 ist ein Kraftfahrzeug 1 mit dem berechtigten Benutzer 2 zu sehen. Das Kraftfahrzeug 1 ist für die Zugangsberechtigung mit einem Schließsystem 3 als Türschließsystem versehen, das eine als eine Steuereinrichtung ausgebildete erste Einrichtung 4 und eine zugehörige zweite Einrichtung 5 umfaßt. Die zweite Einrichtung 5 ist in der Art eines elektronischen Schlüssels, eines Identifikations(ID)-Gebers, einer Chipkarte, einer Smartcard o. dgl. ausgebildet. Die zweite Einrichtung 5 befindet sich im Besitz des berechtigten Benutzers 2, womit dieser innerhalb eines Wirkbereichs 8 Zugang zum Kraftfahrzeug 1 besitzt.

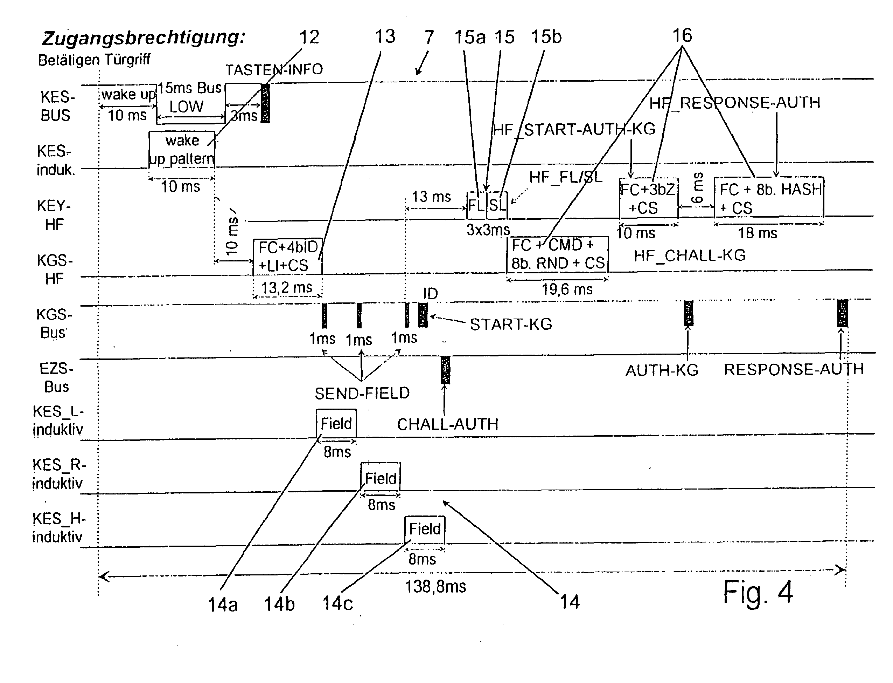

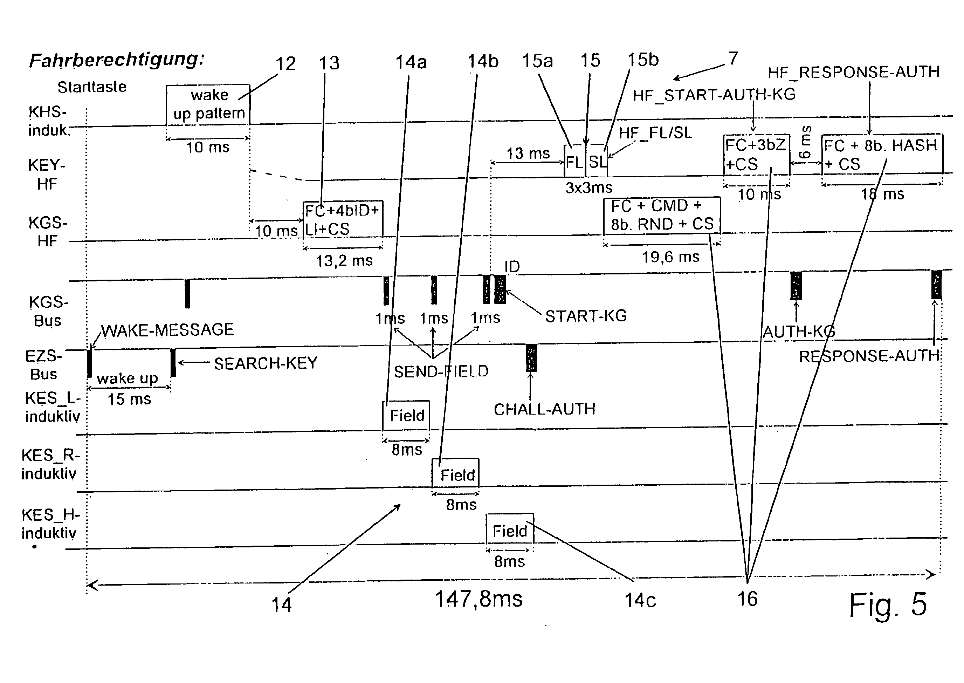

Die erste Einrichtung 4 besitzt wenigstens zwei Zustände, wobei im ersten Zustand eine Verriegelung und im zweiten Zustand eine Entriegelung der Autotüren 6 vorliegt. Die beiden Einrichtungen 4, 5 besitzen zu deren bestimmungsgemäßen Betrieb Mittel zum Senden und/oder Empfangen von Signalen 7. Bei wenigstens einem dieser zwischen der zweiten Einrichtung 5 und der ersten Einrichtung 4 übertragenen Signale 7 handelt es sich um ein codiertes, elektromagnetisches Betriebssignal 16 (siehe Fig. 4 oder 5), das nachfolgend auch als fünftes Signal bezeichnet ist. Das codierte Betriebssignal 16 dient zur Authentifikation der zweiten Einrichtung 5, womit bei berechtigter zweiter Einrichtung 5 nach positiver Auswertung des übertragenen Betriebssignals 16 eine Änderung des Zustandes der ersten Einrichtung 4 bewirkbar ist. Die Übertragung des codierten Betriebssignals 16 erfolgt dann, wenn der berechtigte Benutzer 2 den Türgriff 28 an der Autotüre 6 betätigt oder sich dem Türgriff 28 annähert. Dadurch wird die Entriegelung der Autotüren 6 entsprechend der Keyless Entry-Funktionalität ausgelöst. Ebensogut kann die Übertragung des codierten Betriebssignals 16 auch selbsttätig ohne Mitwirkung des Benutzers 2 erfolgen, sobald dieser den Wirkbereich 8 betritt, was jedoch im folgenden nicht näher betrachtet wird. Schließt der Benutzer die Autotüren 6 von außen, so erfolgt eine selbsttätige Verriegelung der Autotüren 6. Ebensogut kann die selbsttätige Verriegelung der Autotüren 6 erfolgen, nachdem der Benutzer den Wirkbereich 8 verlassen hat.

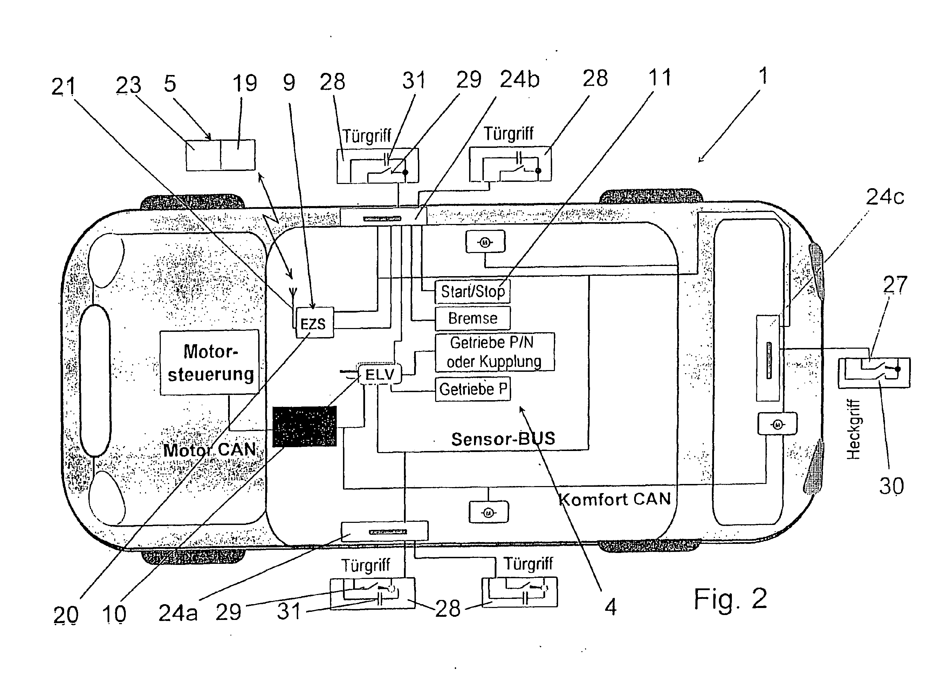

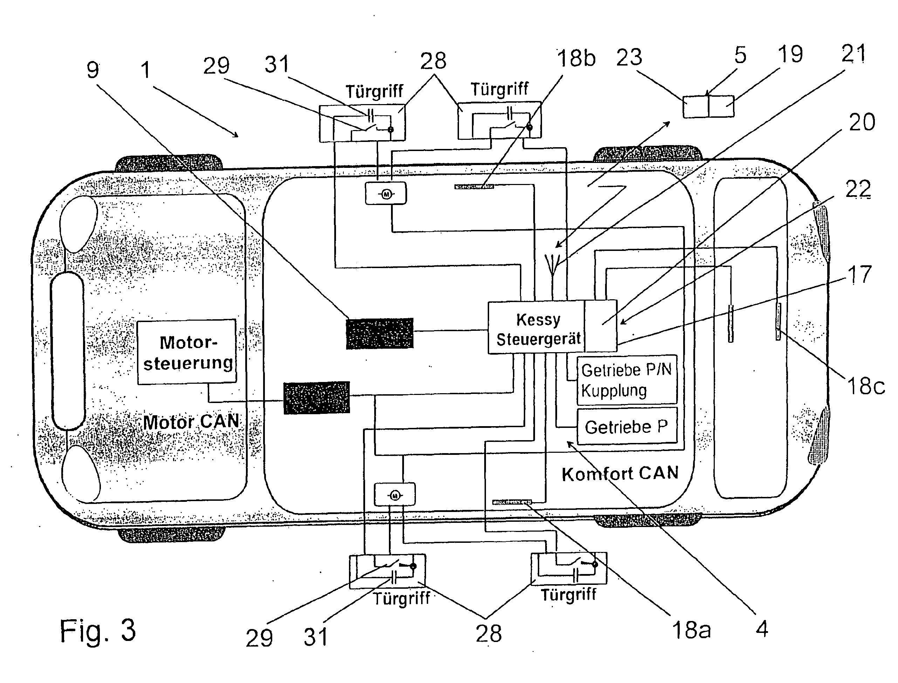

Das Schließsystem 3 stellt weiterhin die Fahrberechtigung für das Kraftfahrzeug 1 fest. Hierzu bewirkt die als Steuereinrichtung ausgebildete erste Einrichtung 4 ebenfalls entsprechend den beiden Zuständen die Ent- und/oder Verriegelung des Zündschlosses 9 oder der Lenkradverriegelung 10, die in Fig. 2 oder 3 zu sehen sind. Ebensogut kann ein sonstiges funktionsrelvantes Bauteil des Kraftfahrzeugs 1 durch die erste Einrichtung 4 dementsprechend angesteuert werden. Beispielsweise kann dadurch eine Freigabe und/oder Sperrung einer Wegfahrsperre, des Motorsteuergeräts o. dgl. erfolgen. Die Übertragung des codierten Betriebssignals 16 zur Authentifikation der zweiten Einrichtung 5 erfolgt dann, wenn der berechtigte Benutzer 2 sich im Kraftfahrzeug 1 befindet und einen Start/Stop-Schalter 11 betätigt. Dadurch wird der Start-Vorgang o. dgl. des Kraftfahrzeugs 1 entsprechend der Keyless Go-Funktionalität ausgelöst.

Die Funktionsweise des erfindungsgemäßen Schließsystems 3 soll nun anhand der Fig. 4 oder 5 näher erläutert werden. Zunächst sendet die erste Einrichtung 4 ein erstes elektromagnetisches Signal 12 für die zugehörige zweite Einrichtung 5 als Wecksignal. Dadurch wird die zweite Einrichtung 5 aus einem Ruhezustand mit verringertem Energiebedarf in einen aktivierten Zustand für den bestimmungsgemäßen Betrieb übergeführt. Danach sendet die erste Einrichtung 4 wenigstens ein weiteres elektromagnetisches Signal 14 als Bereichsabgrenzungssignal, das nachfolgend auch als drittes Signal bezeichnet ist. Dadurch kann die zugehörige zweite Einrichtung 5 deren Standort in Bezug auf die erste Einrichtung 4 bestimmen. Insbesondere läßt sich feststellen, ob die zweite Einrichtung 5 außerhalb am Kraftfahrzeug 1 sowie an welcher Stelle und/oder im Kraftfahrzeug 1 befindlich ist. Nachfolgend sendet die zweite Einrichtung 5 ein den Standort beinhaltendes weiteres Signal 15 zur ersten Einrichtung 4 als Rückantwortsignal, das im folgenden auch als viertes Signal bezeichnet ist. Schließlich wird dann, wie bereits beschrieben, das codierte elektromagnetische Betriebssignal 16, das auch als fünftes Signal bezeichnet ist, zur Authentifikation zwischen der ersten und der zweiten Einrichtung 4, 5 übertragen. Das fünfte Signal 16 kann insbesondere aus mehreren Teilsignalen bestehen und in einer bidirektionalen Kommunikation zwischen den beiden Einrichtungen 4, 5 übertragen werden. Im Hinblick auf nähere Einzelheiten zur bidirektionalen Kommunikation an sich wird auch auf die DE 43 40 260 A1 verwiesen.

Nachfolgend sollen verschiedene Weiterbildungen und zweckmäßige Ausgestaltungen des erfindungsgemäßen Schließsystems 3 näher erläutert werden.

Das Senden des Wecksignals 12 von der ersten Einrichtung 4 wird durch Betätigung eines Schalters oder Sensors vom Benutzer ausgelöst. Für die Zugangsberechtigung kann es sich beispielsweise um die manuelle Betätigung des Türgriffs 28 oder des Heckklappengriffs 27 handeln, wie in Fig. 2 zu sehen ist. Hierzu ist im Türgriff 28 des Kraftfahrzeugs 1 ein Schalter 29 sowie im Heckklappengriff 27 ein Schalter 30 angeordnet. Wird ein beispielsweise kapazitiv arbeitender Näherungssensor 31 verwendet, wie ebenfalls in Fig. 2 am Türgriff 28 gezeigt ist, so kann vom Sensor 31 die Annäherung der Hand des Benutzers 2 an den Türgriff 28 beziehungsweise den Heckklappengriff 27 detektiert werden. Für die Fahrberechtigung befindet sich ein vom Benutzer manuell betätigbarer Start/Stop-Schalter 11 im Kraftfahrzeug 1. Zweckmäßigerweise ist der Start/Stop-Schalter 11 am Gangwahlhebel, am Zündschloß 9, im Armaturenbrett, in der Mittelkonsole o. dgl. im Kraftfahrzeug 1 angeordnet.

Das als Wecksignal dienende erste Signal 12 kann bereits mit einer Kennung versehen sein, wobei die Kennung den Kraftfahrzeug-Typ codiert. Dadurch werden lediglich dem Kraftfahrzeug-Typ entsprechende zweite Einrichtungen 5 durch das erste Signal 12 in den aktivierten Zustand übergeführt. Es läßt sich somit verhindern, daß zufällig im Wirkbereich 8 befindliche zweite Einrichtungen, die zu anderen Kraftfahrzeug-Typen gehören, aktiviert werden, was häufig auf Parkplätzen oder in Parkhäusern der Fall ist.

Nach Empfang des Wecksignals 12 sind zunächst sämtliche im Wirkbereich 8 befindliche zweite Einrichtungen 5, die zum selben Kraftfahrzeug-Typ gehören, aktiviert. In einer bevorzugten Weiterbildung des Schließsystems 3 sendet die erste Einrichtung 4 zwischen dem ersten Signal 12 und dem dritten Signal 14 ein zweites elektromagnetisches Signal 13 zur zweiten Einrichtung 5 als Selektionssignal, wie näher anhand von Fig. 4 oder 5 zu erkennen ist. Das zweite Signal 13 enthält eine Information über die Identität des Kraftfahrzeugs 1. Dadurch wird bewirkt, daß lediglich die tatsächlich zur ersten Einrichtung 4 zugehörigen zweiten Einrichtungen 5 im aktivierten Zustand verbleiben. Im aktivierten Zustand befindliche, nicht zum Kraftfahrzeug 1 zugehörige zweite Einrichtungen werden jedoch in den Ruhezustand zurückgeführt.

Es bietet sich an, die zur ersten Einrichtung 4 zugehörigen zweiten Einrichtungen 5 in gruppenartige Linien einzuteilen. Bevorzugterweise besitzt ein Kraftfahrzeug 1 zwei Linien, und zwar einen ersten elektronischen Schlüssel sowie Ersatzschlüssel als erste Linie und einen zweiten elektronischen Schlüssel sowie Ersatzschlüssel als zweite Linie. Zweckmäßigerweise weisen die Linien eine Rangfolge zur Durchführung der Authentifikation auf, so daß bei Vorhandensein beider Linien im Wirkbereich 8 lediglich eine Authentifikation mit der ranghöheren Linie, die entsprechend ausgewählt wird, durchzuführen ist. Das Selektionssignal 13 kann nun zusätzlich eine Information zu den der ersten Einrichtung 4 zugeordneten Linien enthalten, um dem Schließsystem 3 gegebenenfalls eine Auswahl für die Authentifikation zu gestatten.

Das zweite Signal 13 kann in der Art eines Referenz- oder Nullpunktes zur Synchronisation für das dritte Signal 14 dienen. Das Bereichsabgrenzungssignal 14 wird in einer bestimmten zeitlichen Beziehung zum Ende des zweiten Signals 13 von der ersten Einrichtung 4 gesendet. Nach Empfang des Selektionssignals 13 kann dann die zweite Einrichtung 5 genau bestimmen, wann der Empfang des nachfolgenden Bereichsabgrenzungssignals 14 zu erfolgen hat. Folglich kann auch der eventuelle Nichtempfang des Bereichsabgrenzungssignals 14 zur Standortbestimmung dementsprechend ausgewertet werden, wie nachfolgend noch näher erläutert ist.

Bevorzugterweise besteht das als Bereichsabgrenzungssignal dienende dritte Signal 14 aus mehreren Teilsignalen. Es bieten sich hierfür drei Teilsignale 14a, 14b, 14c an, wobei diese jeweils einer Kraftfahrzeugseite und dem Kraftfahrzeugheck zugeordnet sind. So ist das Teilsignal 14a der linken Kraftfahrzeugseite, das Teilsignal 14b der rechten Kraftfahrzeugseite und das Teilsignal 14c dem Kraftfahrzeugheck zugeordnet, wobei hierzu auch auf Fig. 2 oder 3 verwiesen wird. Die Teilsignale 14a, 14b, 14c werden nacheinander, in einer bestimmten Zeitbeziehung zueinander sowie in Synchronisation bezüglich des zweiten Signals 13 von der ersten Einrichtung 4 gesendet, wie auch der Fig. 4 oder 5 zu entnehmen ist. Die Standortbestimmung wird dann entsprechend dem von der zweiten Einrichtung 5 empfangenen jeweiligen Teilsignal 14a, 14b, 14c ermöglicht. Beispielsweise kann die zweite Einrichtung 5 hierfür die empfangene Feldgröße des jeweiligen Teilsignals 14a, 14b, 14c auswerten. Es kann jedoch auch schon ausreichen, falls die Reichweite der Teilsignale 14a, 14b, 14c entsprechend begrenzt ist, daß die zweite Einrichtung 5 den Empfang beziehungsweise Nichtempfang des jeweiligen Teilsignals 14a, 14b, 14c auswertet. Wird beispielsweise nur das Teilsignal 14a empfangen, so befindet sich die zweite Einrichtung 5 an der linken Kraftfahrzeugseite. Wird nur das Teilsignal 14b empfangen, so befindet sich die zweite Einrichtung 5 an der rechten Kraftfahrzeugseite. Wird lediglich das Teilsignal 14c empfangen, so befindet sich die zweite Einrichtung 5 am Kraftfahrzeugheck. Werden schließlich alle Teilsignale 14a, 14b, 14c empfangen, dann ist die zweite Einrichtung 5 im Inneren des Kraftfahrzeugs 1 befindlich.

Das als Rückantwortsignal dienende vierte Signal 15, das von der zweiten Einrichtung 5 zur ersten Einrichtung 4 gesendet wird, enthält eine Information zu dem mit Hilfe des Signals 14 bestimmten Standort. Bei dieser Information kann es sich um die von der zweiten Einrichtung 5 empfangenen Feldgrößen der jeweiligen Teilsignale 14a, 14b, 14c handeln. Wird von der zweiten Einrichtung 5 lediglich der Empfang beziehungsweise Nichtempfang für das jeweilige Teilsignal 14a, 14b, 14c des dritten Signals 14 ausgewertet, so enthält das vierte Signal 15 die entsprechende Ja/Nein-Information zu diesen Teilsignalen 14a, 14b, 14c. Zusätzlich kann das vierte Signal 15 eine Information zu der Linie enthalten, der die zweite Einrichtung 5 angehört. Gegebenenfalls kann es sich anbieten, daß die Information zur Linie in einem der entsprechenden Rangfolge für die Linie zugeordneten Zeitschlitz des vierten Signals 15 enthalten ist. Beispielsweise ist in Fig. 4 oder 5 für zwei Linien zu sehen, daß für die erste Linie die Information zum Standort im ersten Zeitschlitz 15a und für die zweite Linie im zweiten Zeitschlitz 15b übertragen wird.

Besonders bevorzugt ist, daß das erste Signal 12 als Wecksignal und/oder das dritte Signal 14 als Bereichsabgrenzungsignal beziehungsweise die Teilsignale 14a, 14b, 14c des dritten Signals 14 eine im induktiven (NF-)Bereich liegende Frequenz aufweisen. Insbesondere kann diese Frequenz 20 kHz betragen. Vorteilhafterweise weist ein solches induktives Signal bereits eine begrenzte Reichweite auf. Dadurch wird zum einen erreicht, daß die zweite Einrichtung 5 lediglich dann aktiviert wird, wenn sie im Inneren des Kraftfahrzeugs 1 oder in einem der Wirkbereiche 8 außen am Kraftfahrzeug 1 befindlich ist. Zum anderen ist die Bereichsabgrenzung auf eine einfache Weise möglich, indem beispielsweise nur der Empfang oder Nichtempfang des Teilsignals 14a, 14b, 14c festzustellen ist.

Die erste Einrichtung 4 weist als Mittel zum Senden von Signalen mehrere induktive Sender und zwar drei induktive Sender 24a, 24b, 24c auf, wie der Fig. 2 zu entnehmen ist. Dabei ist ein induktiver Sender 24a der linken Kraftfahrzeugseite, ein weiterer induktiver Sender 24b der rechten Kraftfahrzeugseite sowie schließlich noch ein weiterer induktiver Sender 24c dem Kraftfahrzeugheck zugeordnet. Ebensogut kann, wie in der Fig. 3 zu sehen ist, die Einrichtung 4 mit einem zentralen Steuergerät 17 ausgestattet sein, das seinerseits als induktive Sender dienende Spulen 18a, 18b, 18c an der linken sowie rechten Kraftfahrzeugseite und dem Kraftfahrzeugheck ansteuert. Die zweite Einrichtung 5 besitzt als Mittel zum Empfangen von Signalen einen induktiven Empfänger 19, um die von den Sendern 24a, 24b, 24c beziehungsweise Spulen 18a, 18b, 18c gesendeten ersten und dritten Signale 12, 14 zu empfangen.

Ebenfalls besonders bevorzugt ist, daß das zweite Signal 13 als Selektionssignal und/oder das vierte Signal 15 als Rückantwortsignal und/oder das fünfte Signal 16 als codiertes Betriebssignal eine im Hochfrequenz(HF)-Bereich liegende Frequenz aufweisen. Insbesondere kann diese Frequenz 315 oder 868 MHz betragen. Vorteilerhafterweise benötigen diese besonders datenintensiven Signale 13,15, 16 dann lediglich kurze Übertragungszeiten, wodurch das Schließsystem 3 reaktionsschnell arbeitet. Somit ist zum einen der Komfort für den Benutzer 2 gesteigert und zum anderen sind Manipulationsmöglichkeiten für einen etwaigen unberechtigten Benutzer verringert.

Die erste Einrichtung 4 besitzt daher als Mittel zum Senden und/oder Empfangen von Signalen auch einen HF-Sender/Empfänger 20 mit einer Antenne 21. Der HF-Sender/Empränger 20 kann beispielsweise in einem als Dachmodul 22 ausgebildeten Steuergerät angeordnet sein, wie der Fig. 3 zu entnehmen ist. Ebensogut kann sich der HF-Sender/Empfänger 20 im Zündstartschloß 9 befinden, wie in Fig. 2 gezeigt ist. Selbstverständlich ist auch eine Anordnung des HF-Sender/Empfängers 20 in einem in der Mittelkonsole des Kraftfahrzeugs befindlichen Steuergerät o. dgl. möglich. Die zweite Einrichtung 5 besitzt ebenfalls als Mittel zum Senden und/oder Empfangen von Signalen einen HF-Sender/Empfänger 23 mit Antenne.

Die Erfindung ist nicht auf das beschriebene und dargestellte Ausführungsbeispiel beschränkt. Sie umfaßt vielmehr auch alle fachmännischen Weiterbildungen im Rahmen des Erfindungsgedankens. So kann ein derartiges Schließsystem nicht nur im Kraftfahrzeug eingesetzt werden. Es ist auch eine Verwendung für ein sonstiges Türschloß, das sich beispielsweise an einer Immobilie o. dgl. befindet, möglich.

### Bezugszeichen-Liste:

- 1:: Kraftfahrzeug
- 2:: (berechtigter) Benutzer
- 3:: Schließsystem
- 4:: erste Einrichtung
- 5:: zweite Einrichtung
- 6:: Autotüre
- 7:: Signal
- 8:: Wirkbereich
- 9:: Zündschloß
- 10:: Lenkradverriegelung
- 11:: Start/Stop-Schalter
- 12:: erstes Signal / Wecksignal
- 13:: zweites Signal / Selektionssignal
- 14:: drittes Signal / Bereichsabgrenzungssignal
- 14a,b,c;: Teilsignal (des dritten Signals)
- 15:: viertes Signal / Rückantwortsignal
- 15a,b:: Zeitschlitz
- 16:: fünftes Signal / (codiertes) Betriebssignal
- 17:: zentrales Steuergerät
- 18a,b,c:: Spule
- 19:: induktiver Empfänger
- 20;: HF-Sender/Empfänger (von erster Einrichtung)
- 21:: Antenne
- 22:: Dachmodul
- 23:: HF-Sender/Empfänger (von zweiter Einrichtung)
- 24a,b,c:: induktiver Sender
- 27:: Heckklappengriff
- 28 :: Türgriff
- 29 :: Schalter (in Türgriff)
- 30:: Schalter (in Heckklappengriff)
- 31:: Sensor (im Türgriff)

## Patentansprüche

1. Schließsystem für die Zugangs- und/oder Fahrberechtigung bei einem Kraftfahrzeug (1), mit einer wenigstens zwei Zustände besitzenden, als Steuereinrichtung ausgebildeten ersten Einrichtung (4), wie einer Steuereinrichtung zur Ent- und/oder Verriegelung der Autotüren (6), des Zündschlosses (9), der Lenkradverriegelung (10), zur Freigabe und/oder Sperrung der Wegfahrsperre oder des Motorsteuergeräts, und mit einer zugehörigen, in der Art eines elektronischen Schlüssels, eines ID-Gebersoder einer Chipkarte ausgebildeten zweiten Einrichtung (5), wobei die beiden Einrichtungen (4, 5) zu deren bestimmungsgemäßen Betrieb Mittel zum Senden und/oder Empfangen von Signalen besitzen, und wobei es sich bei wenigstens einem der zwischen der zweiten Einrichtung (5) und der ersten Einrichtung (4) übertragenen Signale (7) um ein codiertes Betriebssignal (16) zur Authentifikation der zweiten Einrichtung (5) handelt, so daß nach positiver Auswertung des übertragenen Betriebssignals (16) bei berechtigter zweiter Einrichtung (5) eine Änderung des Zustandes der ersten Einrichtung (4) bewirkbar ist, **dadurch gekennzeichnet, daß** zunächst die erste Einrichtung (4) ein erstes elektromagnetisches Signal (12) für die zugehörige zweite Einrichtung (5) als Wecksignal sendet, derart daß die zweite Einrichtung (5) aus einem Ruhezustand mit verringertem Energiebedarf in einen aktivierten Zustand für den bestimmungsgemäßen Betrieb übergeführt wird, daß die erste Einrichtung (4) danach wenigstens ein weiteres drittes elektromagnetisches Signal (14) als Bereichsabgrenzungssignal sendet, derart daß die zugehörige zweite Einrichtung (5) deren Standort in Bezug auf die erste Einrichtung (4) am und/oder im Kraftfahrzeug (1) bestimmen kann, daß nachfolgend die zweite Einrichtung (5) ein den Standort beinhaltendes weiteres viertes Signal (15) zur ersten Einrichtung (4) sendet, daß schließlich das der Authentifikation dienende fünfte elektromagnetische Signal (16) zwischen der ersten und der zweiten Einrichtung (4, 5) übertragen wird, und daß die erste Einrichtung (4) zwischen dem ersten und dem dritten Signal (12, 14) ein zweites elektromagnetisches Signal (13) zur zweiten Einrichtung (5) als Selektionssignal sendet, wobei das zweite Signal (13) eine Information über die Identität des Kraftfahrzeugs enthält, derart daß zur ersten Einrichtung (4) zugehörige zweite Einrichtungen (5) im aktivierten Zustand verbleiben und im aktivierten Zustand befindliche, nicht zugehörige zweite Einrichtungen in den Ruhezustand zurückgeführt werden.

2. Schließsystem nach Anspruch 1, **dadurch gekennzeichnet, daß** das fünfte elektromagnetische Signal (16) in einer bidirektionalen Kommunikation bestehend aus mehreren Teilsignalen übertragen wird.

3. Schließsystem nach Anspruch 1 oder 2, **dadurch gekennzeichnet, daß** die zur ersten Einrichtung (4) zugehörigen zweiten Einrichtungen (5) aus gruppenartigen Linien, insbesondere aus zwei Linien, beispielsweise aus einem ersten elektronischen Schlüssel sowie Ersatzschlüssel und einem zweiten elektronischen Schlüssel sowie Ersatzschlüssel, bestehen, daß vorzugsweise die Linien eine Rangfolge zur Durchführung der Authentifikation aufweisen, und daß weiter vorzugsweise das zweite Signal (13) zusätzlich eine Information zu den der ersten Einrichtung (4) zugeordneten Linien enthält.

4. Schließsystem nach Anspruch 1, 2 oder 3, **dadurch gekennzeichnet, daß** das erste Signal (12) nach Betätigung eines Schalters (29, 30) oder Sensors (31) durch den Benutzer, beispielsweise durch manuelle Betätigung des Türgriffs (28), des Heckklappengriffs (29) oder eines Start/Stop-Schalters (11) im Kraftfahrzeug (1) beziehungsweise durch Annäherung an den Türgriff (28), von der ersten Einrichtung (4) gesendet wird.

5. Schließsystem nach einem der Ansprüche 1 bis 4, **dadurch gekennzeichnet, daß** das erste Signal (12) mit einer Kennung, insbesondere zur Codierung des Kraftfahrzeug-Typs, versehen ist, derart daß lediglich dem Kraftfahrzeugtyp entsprechende zweite Einrichtungen (5) durch das erste Signal (12) in den aktivierten Zustand übergeführt werden.

6. Schließsystem nach einem der Ansprüche 1 bis 5, **dadurch gekennzeichnet, daß** das zweite Signal (13) zur Synchronisation für das dritte Signal (14) dient, derart daß das dritte Signal (14) in einer bestimmten zeitlichen Beziehung zum Ende des zweiten Signals (13) von der ersten Einrichtung (4) gesendet wird.

7. Schließsystem nach einem der Ansprüche 1 bis 6, **dadurch gekennzeichnet, daß** das dritte Signal (14) aus mehreren, vorzugsweise drei Teilsignalen (14a, b, c) besteht, wobei insbesondere jeweils ein Teilsignal (14a, b) je einer Kraftfahrzeugseite und ein Teilsignal (14c) dem Kraftfahrzeugheck zugeordnet ist, und daß die Teilsignale (14a, b, c) nacheinander, in einer bestimmten Zeitbeziehung zueinander sowie in Synchronisation bezüglich des zweiten Signals (13) von der ersten Einrichtung (4) gesendet werden, derart daß die Standortbestimmung für die zweite Einrichtung (5) entsprechend dem von der zweiten Einrichtung (5) empfangenen Teilsignal (14a, b, c), insbesondere anhand der Feldgröße und/oder des Empfangs beziehungsweise Nichtempfangs des jeweiligen Teilsignals (14a, b, c), durchführbar ist.

8. Schließsystem nach einem der Ansprüche 1 bis 7, **dadurch gekennzeichnet, daß** das vierte Signal (15) eine Information zur empfangenen Feldgröße und/oder zum Empfang beziehungsweise Nichtempfang für das jeweilige Teilsignal (14a, b, c) des dritten Signals (14) enthält, und daß vorzugsweise das vierte Signal (15) zusätzlich eine Information zur Linie enthält, wobei gegebenenfalls die Information zur Linie in einem der entsprechenden Rangfolge für die Linie zugeordneten Zeitschlitz (15a, b) des vierten Signals (15) enthalten ist.

9. Schließsystem nach einem der Ansprüche 1 bis 8, **dadurch gekennzeichnet, daß** das erste Signal (12) und/oder das dritte Signal (14) beziehungsweise die Teilsignale (14a, b, c) des dritten Signals (14) eine im induktiven (NF) Bereich liegende Frequenz, die insbesondere 20 kHz beträgt, aufweisen.

10. Schließsystem nach einem der Ansprüche 1 bis 9, **dadurch gekennzeichnet, daß** das zweite Signal (13) und/oder das vierte Signal (15) und/oder das fünfte Signal (16) eine im Hochfrequenz(HF)-Bereich liegende Frequenz, die insbesondere 315 oder 868 MHz beträgt, aufweisen.

11. Schließsystem nach einem der Ansprüche 1 bis 10, **dadurch gekennzeichnet, daß** die erste Einrichtung (4) mehrere, vorzugsweise drei induktive Sender (24a, b, c) beziehungsweise als induktive Sender dienende Spulen (18a, b, c) besitzt, wobei insbesondere ein induktiver Sender (24a) oder eine Spule (18a) der linken Kraftfahrzeugseite, ein weiterer induktiver Sender (24b) oder eine weitere Spule (18b) der rechten Kraftfahrzeugseite sowie schließlich noch ein weiterer induktiver Sender (24c) oder noch eine weitere Spule (18c) dem Kraftfahrzeugheck zugeordnet sind, und daß die zweite Einrichtung (5) einen induktiven Empfänger (19) besitzt.

12. Schließsystem nach einem der Ansprüche 1 bis 11, **dadurch gekennzeichnet, daß** die erste Einrichtung (4) einen HF-Sender/Empfänger (20) mit Antenne (21) besitzt, der beispielsweise in einem als Dachmodul (22) ausgebildeten Steuergerät (17), in einem in der Mittelkonsole befindlichen Steuergerät oder im Zündstartschloß (9) angeordnet ist, und daß die zweite Einrichtung (5) ebenfalls einen HF-Sender/Empfänger (23) mit Antenne besitzt.

13. Schließsystem nach einem der Ansprüche 1 bis 12, **dadurch gekennzeichnet, daß** im Türgriff (28) oder Heckklappengriff (27) des Kraftfahrzeugs ein durch den Benutzer (2) manuell betätigbarer Schalter (29, 30) und/oder beispielsweise kapazitiv arbeitender Näherungssensor (31) zum Auslösen des ersten Signals (12) für die Zugangsberechtigung zum Kraftfahrzeug (1) angeordnet ist.

14. Schließsystem nach einem der Ansprüche 1 bis 13, **dadurch gekennzeichnet, daß** am Gangwahlhebel, am Zündschloß (9), im Armaturenbrett oder in der Mittelkonsole ein durch den Benutzer manuell betätigbarer Start/Stop-Schalter (11) zum Auslösen des ersten Signals (12) für die Fahrberechtigung des Kraftfahrzeugs (1) angeordnet ist.

## Claims

1. Locking system for the access and/or drive authorisation of a motor vehicle (1), with a first device (4) designed as a control device having at least two states, as a control device for unlocking and/or locking the car doors (6), the ignition (9), the steering wheel lock (10), for releasing and/or locking the immobiliser or the engine control device, and with an associated second device (5) designed in the form of an electronic key, an ID transmitter or a chipcard, wherein the two device (4, 5) for their correct operation have means for sending or receiving signals, and wherein at least one of the signals (7) transmitted between the second device (5) and the first device (4) is a coded operating signal (16) for authenticating the second device (5), so that after a positive evaluation of the transmitted operating signal (16) with an authorised second device (5) a change can be made to the status of the first device (4), **characterised in that** firstly the first device (4) sends a first electromagnetic signal (12) for the associated second device (5) as a waking signal, such that the second device (5) is transferred from a position of rest with reduced power requirement into an activated state for the correct operation, **in that** the first device (4) then sends at least one additional third electromagnetic signal (14) as a range delimitation signal, such that the associated second device (5) can determine its location in relation to the first device (4) on and/or in the motor vehicle (1), **in that** subsequently the second device (5) sends a further fourth signal (15) to the first device (4) containing the location, **in that** lastly the fifth electromagnetic signal (16) used for authentication is transmitted between the first and the second device (4, 5), and **in that** the first device (4) between the first and the third signal (12, 14) sends a second electromagnetic signal (13) to the second device (5) as a selection signal, wherein the second signal (13) contains information about the identity of the motor vehicle, such that second devices (5) belonging to the first device (4) remain in the activated state and unassociated second devices in the activated position are returned to a position of rest.

2. Locking system according to claim 1, **characterised in that** the fifth electromagnetic signal (16) is transmitted in a bidirectional communication consisting of several partial signals.

3. Locking system according to claim 1 or 2, **characterised in that** the second devices (5) belonging to the first device (4) consist of group-like lines, in particular two lines, for example a first electronic key and replacement key and a second electronic key and replacement key, **in that** preferably the lines have an order of priority for performing the authentication, and **in that** more preferably the second signal (13) also contains information about the lines allocated to the first device (4).

4. Locking system according to claim 1, 2 or 3, **characterised in that** the first signal (12) is sent from the first device (4) after the user activates a switch (29, 30) or sensor (31), for example by manually activating the door handle (28), the rear flap handle (29) or a start/stop switch (11) in the motor vehicle (1) or by approaching the door handle (28).

5. Locking system according to one of claims 1 to 4, **characterised in that** the first signal (12) is provided with an identification code, in particular for coding the motor vehicle type, such that only second devices (5) corresponding to the motor vehicle type are brought into the activated state by the first signal (12).

6. Locking system according to one of claims 1 to 5, **characterised in that** the second signal (13) is used for synchronisation for the third signal (14) such that the third signal (14) is sent from the first device (4) in a specific time relationship to the end of the second signal (13).

7. Locking system according to one of claims 1 to 6, **characterised in that** the third signal (14) consists of several, preferably three partial signals (14a, b, c), wherein in particular one partial signal (14a, b) is allocated to each side of the motor vehicle respectively and one partial signal (14c) is allocated to the motor vehicle rear, and **in that** the partial signals (14a, b, c) are sent from the first device (4) one after the other in a specific time relationship to one another and in synchronisation with respect to the second signal (13), such that the definition of location for the second device (5) can be carried out according to the partial signal (14a, b, c) received by the second device (5), in particular by way of the field quantity and/or the receipt or non receipt of the respective partial signal (14a, b, c).

8. Locking system according to one of claims 1 to 7, **characterised in that** the fourth signal (15) contains information about the received field quantity and/or the receipt or non-receipt for the respective partial signal (14a, b, c) of the third signal (14), and **in that** preferably the fourth signal (15) also contains information about the line, wherein If necessary the information about the line is contained in a time slot (15a, b) of the fourth signal (15) allocated to the corresponding order of priority for the line.

9. Locking system according to one of claims 1 to 8, **characterised in that** the first signal (12) and/or the third signal (14) or the partial signals (14a, b, c) of the third signal have a frequency lying within the inductive (NF) range, which is in particular 20 kHz.

10. Locking system according to one of claims 1 to 9, **characterised in that** the second signal (13) and/or the fourth signal (15) and/or the fifth signal (16) have a frequency within the high frequency (HF) range which is in particular 315 or 868 MHz.

11. Locking system according to one of claims 1 to 10, **characterised in that** the first device (4) has several, preferably three inductive transmitters (24a, b, c) or coils (18a, b, c) acting as inductive transmitters, wherein in particular an inductive transmitter (24a) or a coil (18a) of the left motor vehicle side, a further inductive transmitter (24b) or a further coil (18b) of the right motor vehicle side and lastly a further inductive transmitter (24c) or even a further coil (18c) are allocated to the motor vehicle rear, and **in that** the second device (5) has an inductive receiver (19).

12. Locking system according to one of claims 1 to 11, **characterised in that** the first device (4) has a HF transmitter/receiver (20) with an aerial (21), which for example is arranged in a control device (17) designed as a roof module (22), in a control device located in the central console or in the ignition lock (9), and **in that** the second device (5) also has a HF transmitter/receiver (23) with an aerial.

13. Locking system according to one of claims 1 to 12, **characterised in that** in the door handle (28) or rear flap handle (27) of the motor vehicle a switch (29, 30) activated manually by the user (2) is arranged and/or for example a capacitively operating proximity sensor (31) for triggering the first signal (12) for the authorisation access to the motor vehicle (1).

14. Locking system according to one of claims 1 to 13, **characterised in that** on the gear stick, on the ignition (9), on the instrument panel or in the central console a start/stop switch (11) activated manually by the user is arranged for triggering the first signal (12) for authorising the drive of the motor vehicle (1).

## Revendications

1. Système de fermeture notamment pour autoriser l'accès et/ou la conduite d'un véhicule automobile 1 comprenant :
- une première installation 4 réalisée comme installation de commande ayant au moins deux états ainsi qu'une installation de commande pour verrouiller et/ou déverrouiller les portes 6 du véhicule, la serrure d'allumage 9, le verrouillage du volant de direction 10, pour libérer et/ou bloquer la condamnation de déplacement ou l'appareil de commande du moteur, et
- une seconde installation 5 correspondante, en forme de clef électronique, de generateur ID ou de carte à puce,
- les deu installations 4, 5 ayant des moyens de mise en oeuvre appropries pour emettre et/ou recevoir des signau ; et
- au moins l'un des signau 7 ec ange entre la seconde installation 5 et la première installation 4 est un signal de fonctionnement 16, code pour aut entifier la seconde installation 5 de façon qu'une e ploitation positive du signal de fonctionnement 16, transmis, lorsque la seconde installation 5 est autorisee, produise une modification de l'etat de la première installation 4,
**caracterise en ce que**
tout d'abord la première installation 4 emet un premier signal electromagnetique 12 comme signal de reveil de la seconde installation 5 correspondante de façon à faire passer la seconde installation 5 d'un etat de repos à consommation d'energie reduite, dans un etat active pour un fonctionnement approprie,
- la première installation 4 emettant ensuite un autre signal c'est-à-dire troisième signal electromagnetique 14 comme signal de delimitation de zone, de façon que la seconde installation 5 correspondante puisse determiner l'emplacement par rapport à la première installation 4 sur et/ ou dans le ve icule automobile 1,
- ensuite la seconde installation 5 envoie un autre signal c'est-à-dire quatrième signal 15 avec l'emplacement vers la première installation 4, et
- **en ce qu'**enfin le cinquième signal electromagnetique 16 servant d'aut entification, soit transmis entre la première et la seconde installation 4, 5, et
- la première installation 4 emet entre le premier et le troisième signal 12, 14, un second signal electromagnetique 13 vers la seconde installation 15 comme signal de selection,
- le second signal 13 contenant une information concernant l'identité du ve icule automobile vers les secondes installations 5 correspondant à la première installation 4 de façon à rester à l'etat active et que les secondes installations, non correspondantes qui se trouvent à l'etat active, soient remises au repos.

2. Système de fermeture selon la revendication 1,
**caracterise en ce que**
le cinquième signal electromagnetique 16 est transmis par une communication bidirectionnelle formee de plusieurs signau partiels.

3. Système de fermeture selon l'une quelconque des revendications 1 ou 2,
**caracterise en ce que**
les secondes installations 5 appartenant à la première installation 4 sont formees de lignes groupees en particulier de deu lignes, par e emple d'une première clef electronique et d'une clef de rec ange ainsi que d'une seconde clef electronique et d'une clef de rec ange,
**en ce que** de preference, les lignes ont un ordre pour effectuer l'aut entification, et
**en ce qu'**en outre de preference, le second signal 13 contient en plus une information concernant les lignes appartenant à la première installation 4.

4. Système de fermeture selon l'une quelconque des revendications 1, 2 ou 3,
**caracterise en ce que**
le premier signal 12 après actionnement d'un commutateur 29, 30 ou d'un capteur 31 par l'utilisateur par e emple par l'actionnement manuel de la poignee de porte 28, de la poignee de volet de coffre 29 ou d'un commutateur marc e/arrêt 11 du ve icule 1 ou en se rapproc ant de la poignee 28 est emis par la première installation 4.

5. Système de fermeture selon l'une quelconque des revendications 1 à 4,
**caracterise en ce que**
le premier signal 12 a une reference notamment pour coder le type de ve icule de façon que seulement des secondes installations 5 correspondant au type de ve icule soient mises à l'etat actif par le premier signal 12.

6. Système de fermeture selon l'une quelconque des revendications 1 à 5,
**caracterise en ce que**
le second signal 13 sert à sync roniser le troisième signal 14 de façon que ce troisième signal 14 soit emis selon une relation c ronologique determinee par rapport à la fin du second signal 13 par la première installation 4.

7. Système de fermeture selon l'une quelconque des revendications 1 à 6,
**caracterise en ce que**
le troisième signal 14 se compose de plusieurs, et notamment de trois signau partiels 14a, b, c, en particulier c aque fois un signal partiel 14a, b est associe à un côte du ve icule et un signal partiel 14c est associe à l'arrière du ve icule, et
les signau partiels 14a, b, c sont emis successivement selon une relation c ronologique determinee les uns par rapport au autres et en sync ronisme avec le second signal 13 par la première installation 4 de façon que la determination de l'emplacement pour la seconde installation 5 puisse se faire en fonction du signal partiel 14a, b, c reçu par la seconde installation 5 notamment en s'appuyant sur l'intensite du c amp et/ou la reception ou la non reception du signal partiel respectif 14a, b, c.

8. Système de fermeture selon l'une quelconque des revendications 1 à 7,
**caracterise en ce que**
le quatrième signal 15 contient une information concernant l'intensite du c amp reçu et/ou la reception ou la non reception de la partie correspondante de signal 14a, b, c du troisième signal 14 et **en ce que** de preference le quatrième signal 14 contient en outre une information concernant la ligne et le cas ec eant l'information concernant la ligne est contenue dans une fenêtre de temps 15a, b du quatrième signal 15 selon l'ordre correspondant pour la ligne.

9. Système de fermeture selon l'une quelconque des revendications 1 à 8,
**caracterise en ce que**
le premier signal 12 et/ou le troisième signal 14 ou les signau partiels 14a, b, c du troisième signal 14 ont une frequence dans la plage inductive BF qui est notamment de 20 kHz.

10. Système de fermeture selon l'une quelconque des revendications 1 à 9,
**caracterise en ce que**
le second signal 13 et/ou le quatrième signal 15 et/ou le cinquième signal 16 ont une frequence situee dans la plage de aute frequence HF, notamment egale à 315 ou 868 MHz.

11. Système de fermeture selon l'une quelconque des revendications 1 à 10,
**caracterise en ce que**
la quatrième installation 4 comporte plusieurs et notamment trois emetteurs inductifs 24a, b, c ou des bobines 18a, b, c servant d'emetteurs inductifs, et notamment un emetteur inductif 24a ou une bobine 18a du côte gauc e du ve icule un autre emetteur inductif 24b ou une autre bobine 18b du côte droit du ve icule ainsi que finalement aussi un autre emetteur inductif 24c ou encore une autre bobine 18c sont associes à l'arrière du ve icule et la seconde installation 5 possède un recepteur inductif 19.

12. Système de fermeture selon l'une quelconque des revendications 1 à 11,
**caracterise en ce que**
la première installation 4 comporte un emetteur/recepteur HF, 20 avec une antenne 21 par e emple realise comme appareil de commande 17 de module de toit 22 dans un appareil de commande dans la console centrale ou dans la serrure de demarreur 9 et la seconde installation 5 possède egalement un recepteur / emetteur HF 23 avec antenne.

13. Système de fermeture selon l'une quelconque des revendications 1 à 12,
**caracterise en ce que**
la poignee de porte 28 ou la poignee de volet de coffre 27 du ve icule automobile comporte un commutateur 29, 30 actionne manuellement par l'utilisateur 2 et/ou par e emple un capteur de pro imite 31 capacitif pour declenc er le premier signal 12 pour l'autorisation d'accès au ve icule automobile 1.

14. Système de fermeture selon l'une quelconque des revendications 1 à 13,
**caracterise en ce que**
le levier selecteur de vitesses, la serrure de contact 9, le tableau de bord ou la console centrale comportent un commutateur marc e/arrêt 11 à commande manuelle par l'utilisateur pour declenc er le premier signal 12 pour l'autorisation de déplacement du ve icule automobile 1.
